# EUROPÄISCHE PATENTSCHRIFT

(11) **EP 2 764 177 B1**
(45) Veröffentlichungstag und Bekanntmachung des Hinweises auf die Patenterteilung: **29.06.2022**
(21) Anmeldenummer: 12762190.2
(22) Anmeldetag: 23.08.2012
(51) Int. Cl.: E04C 3/07

(54) **HOHLPROFIL**
HOLLOW PROFILE
PROFILÉ CREUX

(30) Priorität: 03.10.2011 AT 14242011
(43) Veröffentlichungstag der Anmeldung: 13.08.2014
(73) Patentinhaber: voestalpine Krems GmbH, 3500 Krems an der Donau (AT)
(72) Erfinder: SEYR, Alfred, A-3125 Statzendorf (AT); HAUSER, Christian, A-1140 Wien (AT)
(74) Vertreter: Jell, Friedrich
(86) Internationale Anmeldenummer: PCT/AT2012/000218
(87) Internationale Veröffentlichungsnummer: WO 2013/049866

(56) Entgegenhaltungen:
- EP-A1- 0 469 909
- EP-A1- 2 180 115
- WO-A1-96/30606
- WO-A1-2006/041497
- FR-A1- 2 621 343
- GB-A- 967 745
- JP-A- 2006 118 319
- US-A- 3 733 461

## Beschreibung

Die Erfindung betrifft ein Profil gemäß Anspruch 1. Bevorzugtes Anwendungsgebiet derartiger Profile, die bevorzugt aus hochkorrosionsbeständigem bandbeschichtetem Vormaterial hergestellt werden, sind Dach- und Freilandaufständerungen in der Solarindustrie öder andere dünnwandige Unterkonstruktionen mit hervorragenden Korrosionsschutzeigenschaften, die bevorzugt auch für Korrosionsschutzklassen C3-h bzw. C4-h nach DIN 12944 geeignet sind.

Im Stand der Technik wurden hierfür bislang Alu-Profile, Alu-Rohre oder geschweißte Rohre verwendet, wobei Alu-Rohre und Alu-Profile relativ teuer sind bzw. einen hohen Materialeinsatz aufgrund geringerer Festigkeit im Vergleich zu Stahl erfordern. Offene Profile aus Aluminium oder Stahl weisen schlechte Festigkeitswerte (Biegung, Torsion) auf und sind kaum oder nur schwierig korrosionsschutztechnisch korrekt oder wirtschaftlich zu versteifen. Geschweißte Rohre weisen zwar gute Festigkeitseigenschaften auf, können für Sonderanwendungen aber nur schwierig versteift werden und sind beim Korrosionsschutz problematisch. Bei dünnwandigen Rohren besteht Verzugsgefahr beim Feuerverzinken und Tauchlackieren liefert nur geringe Schichtstärken. Außerdem ist die Vorbehandlung schwierig. Außerdem gibt es beim Pulverbeschichten und Nasslackieren häufig Probleme mit der Lackhaftung bzw. dem Schutz des Innenraumes. Bei bandverzinkem, geschweißtem Stahl bereitet die Schweißnahtnachveredelung beim nachfolgenden Beschichtungsprozess oft Probleme.

US 3 733 461 A offenbart ein Profil.

Der Erfindung liegt daher die Aufgabe zu Grunde, ein Profil zu schaffen, das einfach herzustellen ist und gute Festigkeits- und Korrosionseigenschaften aufweist.

Diese Aufgabe wird durch die technischen Merkmale des Anspruchs 1 gelöst.

Da es sich beim erfindungsgemäßen Profil, insbesondere Rohr, um ein weitgehend geschlossenes Profil handelt, weist es gute Festigkeitseigenschaften auf. Ganz geschlossen ist das erfindungsgemäße Profil nicht, da die Längsränder von den benachbarten Wandabschnitten durch die Abstandhalter beabstandet sind, wodurch sich ein Luftspalt ergibt, der eine gute Durchlüftung des Innenraums gewährleistet. Dieser Spalt bzw. die Materialaufdoppelung erhöht des Weiteren auch die Steifigkeit des Rohres durch die voneinander beabstandeten Randbereiche bzw. Wandabschnitte.

Da das erfindungsgemäße Profil sozusagen aus einem einzigen oder mehreren Blechen gewickelt ist besteht die Möglichkeit, bei der Herstellung des Rohrprofils gleichzeitig auch zusätzliche Versteifungen anzubringen, beispielsweise, indem es zumindest einen durch den Innenraum verlaufenden Wandabschnitt aufweist.

Durch zusätzlich zu den an den Längsrändern angeordnete Verbindungsmittel können Wandabschnitte mittels Verbindungsmitteln formschlüssig verbunden werden, was die Festigkeit des erfindungsgemäßen Profils weiter verbessert. Auf diese Weise können beispielsweise doppellagige Wände mit von einander beabstandeten Lagen in Bereichen hoher Biegespannungen oder einfache oder mehrfache Diagonalversteifungen(z.B. in V-Anordnung) hergestellt werden.

Weitere bevorzugte Ausführungsformen der Erfindung sind Gegenstand der übrigen Unteransprüche.

Weitere Merkmale ergeben sich aus der nachfolgenden Beschreibung bevorzugter Ausführungsbeispiele von nicht erfindungsgemäßen Rohren bzw. Hohlprofilen unter Bezugnahme auf die angeschlossenen Zeichnungen. Es zeigt:
- Fig. 1: eine erste Ausführungsform eines Profils,
- Fig. 2: eine zweite Ausführungsform eines Profils,
- Fig. 3: eine dritte Ausführungsform eines Profils,
- Fig. 4: eine vierte Ausführungsform eines Profils,
- Fig. 5: eine fünfte Ausführungsform eines Profils,
- Fig. 6: eine sechste Ausführungsform eines Profils,
- Fig. 7: eine siebte Ausführungsform eines Profils, auf dem mit Hilfe von Clips Solarpaneele befestigt sind,
- Fig. 8: eine achte Ausführungsform eines Profils, auf dem ebenfalls mit Hilfe von Clips Solarpaneele befestigt sind,
- Fig. 9: eine neunte Ausführungsform eines Profils,
- Fig. 10: eine zehnte Ausführungsform eines Profils,
- Fig. 11: eine elfte Ausführungsform eines Profils,
- Fig. 12: eine zwölfte Ausführungsform eines Profils,
- Fig. 13: eine dreizehnte Ausführungsform eines Profils,
- Fig. 14: eine vierzehnte Ausführungsform eines Profils,
- Fig. 15: eine fünfzehnte Ausführungsform eines Profils und
- Fig. 16: eine sechzehnte Ausführungsform eines Profils.

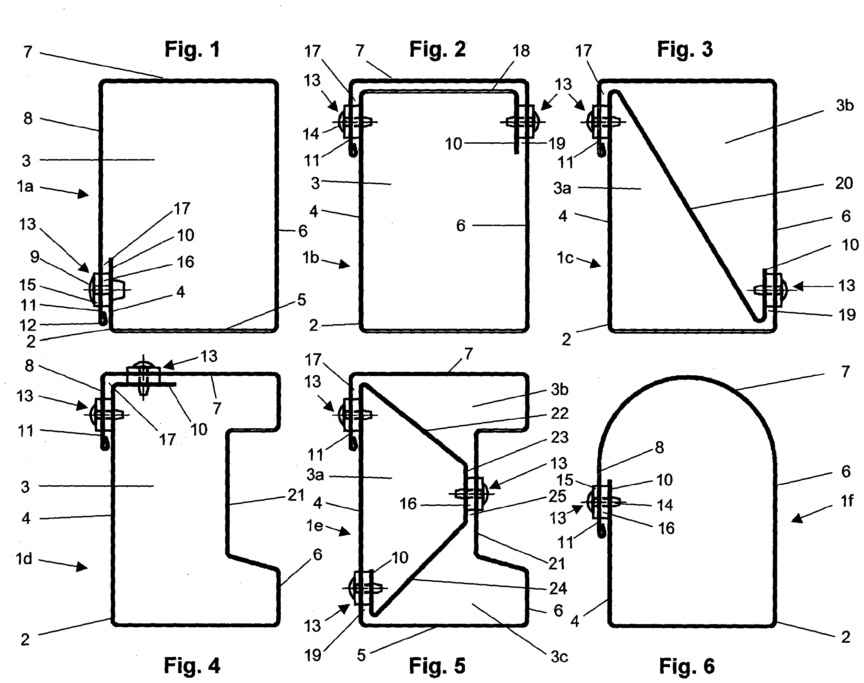

In Fig. 1 ist eine erste einfache, rechteckige Grundform eines als Hohlprofil ausgeführten Rohres 1a dargestellt, das aus einem beispielsweise bandverzinktem und organisch bandbeschichteten Stahlblech 2 mit fünf Wandabschnitten 4, 5, 6, 7 und 8 und zwei Längsrändern 10 und 11 besteht. Die Wandabschnitte 4 bis 8 umgeben einen Innenraum 3. Das Blech 2 ist an den Längsrändern 10, 11 mit Verbindungsmitteln 13, in der dargestellten Ausführungsform Blindnieten 9, formschlüssig verbunden.

Die Längsränder 10, 11 sind in allen Ausführungsformen flächige Bereiche von Wandabschnitten 4, 8, welche entweder Randbereiche von Wandabschnitten sind, wie z.B. dem Wandabschnitt 8, oder bei sehr kurzen Wandabschnitten, wie z.B. dem Wandabschnitt 4, den Wandabschnitt selbst bilden.

In Längsrichtung des Profils 1a, also im rechten Winkel zur Zeichenebene, kann dieses beliebig lang sein und stirnseitig offen oder geschlossen. Die Anzahl und der Abstand der Verbindungsmittel 13 in Längsrichtung des Profils 1a ist von der geforderten Festigkeit der Verbindung im Verbindungsbereich, der Festigkeit des Bleches 2 an den Längsrändern und der Festigkeit der Schrauben 14 abhängig und kann entsprechend gewählt werden.

Zwischen den Längsrändern 10, 11 sind Abstandhalter 16 angeordnet, die beispielsweise aus Kunststoff bestehen können und die Längsränder 10, 11 so auf Abstand halten, dass ein Spalt 17 besteht, der einerseits für eine erhöhte Biegesteifigkeit des Profils im Bereich der Verbindung der Längsränder 10, 11 und andererseits für eine Belüftung des Innenraumes 3 sorgt. An der Außenseite des Längsrandes 11 bzw. im Bereich des Schraubenkopfes der Schraube 14 ist jeweils eine Dichtungsscheibe 15 angeordnet, die bevorzugt ebenfalls aus Kunststoff besteht. Sowohl für die Dichtungsscheiben 15 als auch für die Abstandhalter 16 können aber auch andere Werkstoffe verwendet werden.

Am freien Rand weist der äußere Längsrand 11 eine Umbördelung 12 auf, die eine Tropfnase bildet, welche Ansammlungen von Wasser von der Kante des Längsrandes 11 fern hält, welche möglicherweise herstellungsbedingt nicht so gut vor Korrosion geschützt ist wie die Flächenbereiche des Blechs 2.

In Fig. 2 ist eine im Vergleich zur Ausführungsform von Fig. 1 verstärkte Ausführungsform eines Profils 1b dargestellt, bei der an den Wandabschnitt 4 anschließend ein weiterer Wandabschnitt 18 parallel zum Wandabschnitt 7 angeordnet ist und der Längsrand 10 gegenüber dem zusätzlichen Wandabschnitt 18 um 90° umgebogen parallel zum Wandabschnitt 6 angeordnet und mit Letzterem ebenfalls über Verbindungsmittel 13 (in diesem Fall selbstschneidende Blechschrauben) verbunden ist. Diese Verbindung ist in dieser Ausführungsform genau so aufgebaut wie die Verbindung zwischen dem Wandabschnitt 4 und dem parallel dazu angeordneten Längsrand 11, sodass auch hier ein Spalt 19 zwischen dem Längsrand 10 und dem benachbarten Wandabschnitt 6 gebildet wird, der sich zwischen den Wandabschnitten 7 und 18 bis zum Spalt 17 erstreckt, sodass auch bei dieser Ausführungsform der Innenraum 3 belüftet wird.

Bei der in Fig. 3 dargestellten Ausführungsform eines Profils 1c wird ein an den Wandabschnitt 4 anschließender, innerer Wandabschnitt 20 diagonal durch den Innenraum geführt, der auf diese Weise in zwei Innenraumabschnitte 3a und 3b aufgeteilt wird. An den diagonal durch den Innenraum führenden Wandabschnitt 20, der zu einer erheblichen Versteifung des Profils 1c führt, schließt wiederum der Wandabschnitt bzw. Längsrand 10 des Blechs 2 an, der auf bereits beschriebene Weise unter Bildung eines Spaltes 19 mittels Verbindungsmitteln 13 mit dem benachbarten, parallelen Wandabschnitt 6 fest verbunden ist.

Bei der in Fig. 4 dargestellten Ausführungsform eines Profils 1d ist eine zweifache Verbindung in einem Kantenbereich des Profils 1d vorgesehen. Sowohl der Längsrand 10 als auch der Längsrand 11, die beide im Bereich der selben Kante des Profils 1d angeordnet sind, sind mit dem jeweils benachbarten Wandabschnitt 7 bzw. 8 mit Verbindungsmitteln 13 verbunden. Zur Versteifung des Profils 1d ist des Weiteren im Wandelement 6 eine in Längsrichtung des Profils verlaufende Sicke 21 eingeformt.

Bei der Ausführungsform eines Profils 1e gemäß Fig. 5 wird ein im Bereich der linken oberen Kante des Profils 1e an den Wandabschnitt 4 anschließender innerer Wandabschnitt 22 zunächst schräg durch den Innenraum geführt, an den ein parallel zum Wandabschnitt der Sicke 21 liegender, innerer Wandabschnitt 23 anschließt, der in weiterer Folge wiederum als innerer Wandabschnitt 24 schräg in Richtung zum Wandabschnitt 4 im Bereich der linken unteren Kante des Profils 1e zurück führt. Der Innenraum des Profils 1e wird auf diese Weise in drei Innenraumabschnitte 3a, 3b und 3c aufgeteilt. An den schräg durch den Innenraum führenden inneren Wandabschnitt 24 schließt wiederum der Randabschnitt bzw. Längsrand 10 des Blechs 2 an, der unter Bildung des Spaltes 19 mittels Verbindungsmitteln 13 mit dem benachbarten, parallelen Wandabschnitt 4 fest verbunden ist.

Der zum Wandabschnitt der Sicke 21 parallele, innere Wandabschnitt 23 ist z.B. auf bereits beschriebene Weise mit Verbindungsmitteln 13 unter Bildung eines Spaltes 25 mit dem Wandabschnitt der Sicke 21 fest verbunden. Durch diesen Aufbau wird ein Rohr 1e mit sehr hoher Steifigkeit geschaffen, bei dem durch die Spalten 17, 25 und 19 alle Innenraumabschnitte 3a, 3b, 3c belüftet werden.

In Fig. 6 ist eine einfachere Ausführungsform eines Profils 1f gezeigt, welche jener von Fig. 1 ähnlich ist, bei welcher der obere Wandabschnitt 7 jedoch nicht eben sondern halbkreisförmig gekrümmt ist. Der Bereich der Verbindung der Längsränder 10, 11 mit Hilfe der Verbindungsmittel 13 ist etwas weiter nach oben gerückt, im Übrigen aber so wie zu Fig. 1 beschrieben ausgeführt.

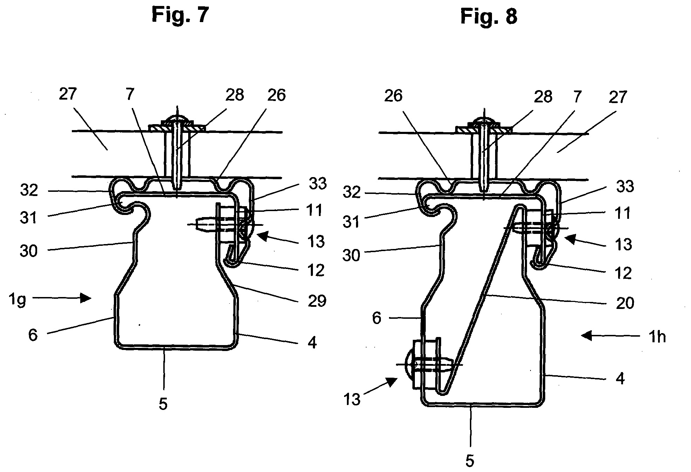

In den Fig. 7 und 8 sind Ausführungsformen von Rohren 1g und 1h dargestellt, an denen mit Hilfe von Clipsen 26 Solarpaneele 27 befestigt sind. Die Clipse 26 sind auf beliebige Art, beispielsweise über Nieten oder Schrauben 28, an den Paneelen 27 befestigt.

Die in Fig. 7 dargestellte Ausführungsform eines Profils 1g weist im Bereich des Wandabschnittes 4 eine Kröpfung 29 und im Bereich des Wandabschnittes 6 eine Sicke 30 auf. Die Kröpfung 29 hat den Vorteil, dass der Längsrand 11 seitlich nicht über den Wandabschnitt 4 übersteht. Die Sicke 30 ist so ausgeführt, dass eine Nase 31 an der linken oberen Kante des Profils 1g gebildet wird.

Die in Fig. 8 dargestellte Ausführungsform eines Profils 1h ist jener von Fig. 7 ähnlich, weist aber wie die in Fig. 3 dargestellte Ausführungsform einen diagonal durch den Innenraum geführten, inneren Wandabschnitt 20 zur Versteifung auf.

Die Clipse 26 weisen in der dargestellten Ausführungsform zwei Schenkel 32, 33 auf, wobei der eine Schenkel die Nase 31 umgreift und der andere Schenkel 33 die Tropfnase bzw. Umbördelung 12. Die Clipse 26 weisen in Längsrichtung des Profils 1g eine begrenze Länge auf, sodass sie zwischen benachbarte Verbindungsmittel 13 eingreifen können. Die Clipse verfügen dabei ebenfalls über (vorzugsweise drei) kleine Sicken, um möglichst wenig Kontaktfläche mit dem Profil aufzuweisen. Eine der Sicken ist dabei auf dem Schenkel 33 angebracht, die beiden anderen auf dem die beiden Schenkel 30, 31 verbindenden Teil. Der Großteil der Clipse 26 weist dadurch wie das Profil im Überlappungsbereich einen gewissen Minimalabstand vom Profil auf, um den Korrosionsschutz zu verbessern.

Natürlich können die Rohre an der Unterseite beispielsweise über einen ähnlichen Clipmechanismus an einem Untergestell befestigt werden, während auf der Oberseite die Solarpaneele wie beschrieben angeclipst werden.

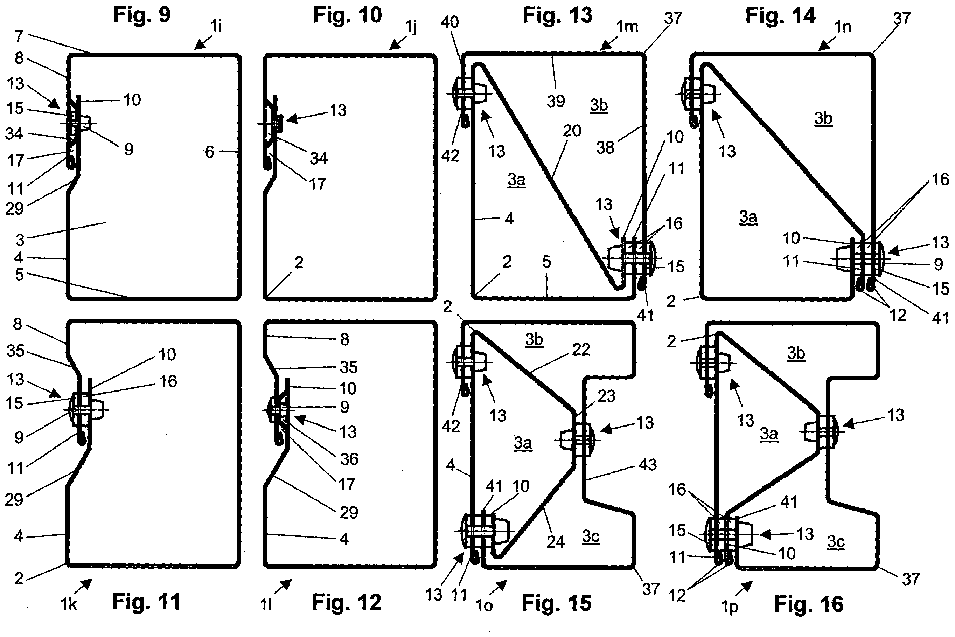

In den Fig. 9 bis 12 sind Ausführungsformen dargestellt, bei denen darauf geachtet wurde, dass über die ebenen Wandabschnitte 4, 5, 6, 7, 8 keine Bauteile hinaus ragen, damit die Profile 1i, 1j, 1k, 1l gut gebündelt bzw gestapelt werden können. Zu diesem Zweck ist beim Wandabschnitt 4 wiederum eine Kröpfung 29 zum Inneren 3 des jeweiligen Profils 1i, 1j, 1k, 1l vorgesehen.

Bei der Ausführungsform des Profils 1i der Fig. 9 ist im Längsrand 11 in den Verbindungsbereichen, in denen die Verbindungsmittel 13 angeordnet sind, eine Reihe von tiefgezogenen Näpfen 34 angebracht, in denen der Kopf der Blindnieten 9 aufgenommen bzw. versenkt ist, sodass er nicht über die Oberfläche des Wandabschnitts 8 vor ragt. Außerdem kann auf die Distanzscheibe zwischen den Randbereichen 10, 11 verzichtet werden, wobei der Spalt 17, in Längsrichtung des Profils 1i betrachtet, zwischen den Näpfen 34 dennoch weiterhin vorhanden ist. Derartige Näpfe können auch bei Verbindungsmitteln 13 in Wandbereichen angebracht sein.

Bei der Ausführungsform eines Profils 1j, die jener von Fig. 9 sehr ähnlich ist, wurde die Blindniete 9 als Verbindungsmittel 13 durch eine formschlüssige Verbindung ersetzt, die als Durchsetzfügen bezeichnet wird.

Beim Rohr 1k von Fig. 11 ist die Kröpfung 29 stärker ausgeführt und auch der Wandabschnitt 8 weist eine Kröpfung 35 auf. Dadurch kann ein Verbindungsmittel verwendet werden, wie es beispielsweise bereits in Verbindung mit Fig. 1 beschrieben wurde, wobei das Verbindungsmittel 13 auch bei dieser Ausführungsform nicht über die Außenflächen der Wandabschnitte 4, 8 vor ragt.

Bei der Ausführungsform eines Profils 1l gemäß Fig. 12 ist im Gegensatz zu den Ausführungsformen von Fig. 9 und 10 am inneren Randbereich 10 eine Reihe von Näpfen 36 angebracht, wobei auch hier keine Distanzscheibe verwendet wird. Selbstverständlich können in alternativen Ausführungsformen auch an beiden Randbereichen 10, 11 Näpfe 34, 36 vorgesehen sein. Erfindungsgemäß ist die Verwendung von Distanzscheiben bzw. Abstandhaltern 16 in Verbindung mit Näpfen 34, 36.

In den Fig. 13 bis 16 sind Ausführungsformen dargestellt, bei denen die Profile 1m, 1n, 1o, 1p nicht nur aus einem Blech 2 sondern auch noch einem zusätzlichen Blech 37 bestehen, welche auf die bereits beschriebene Weise mit Verbindungsmitteln 13 miteinander verbunden sind. Diese Ausführungsformen sind vorteilhaft, wenn der Gesamtquerschnitt nicht auf einer Fertigungsanlage (Gerüstzahl, Bandbreite) formbar ist, einzelne Schalen bzw. Bleche 2, 37 mit einfacheren Querschnitten jedoch schon. Die Profile 1m, 1n, 1o, 1p sind daher unter Umständen aus zwei oder mehr Blechen 2, 37 einfacher zu fertigen als aus nur einem Blech 2, obwohl insgesamt komplexere Querschnitte möglich sind.

Die Ausführungsformen von Fig. 13 bildet wiederum eine im Wesentlichen rechteckige Außenkontur mit einem innen diagonal verlaufenden Wandelement 20 zur Versteifung, wie dies an sich bereits aus der Ausführungsform von Fig. 3 bekannt ist. Allerdings besteht das Profil 1m bei der Ausführungsform von Fig. 13 aus zwei Blechen 2, 37, von denen das erste Blech 2 den Innenraum 3a um 360° dreieckförmig umgibt und das zweite Blech 37 die Kontur auf die im Wesentlichen rechteckige Profilform ergänzt.

Das Blech 37 weist Wandelemente 38, 39, 40 mit Längsrändern 41, 42 auf. Die Längsränder 10, 11 des Blechs 2 sind parallel nach oben gebogen und auf bereits beschrieben Weise mit Hilfe von Verbindungsmitteln 13 mit Blindnieten mit dem Längsrand 41 des Wandelements 38 verbunden, wobei in diesem Fall zwei Abstandhalter 16 zwischen den drei Längsrändern 10, 11, 41 angeordnet sind. Der andere Längsrand 42 des Blechs 37 ist ebenfalls auf bereits beschriebene Weise mit Hilfe von Verbindungsmitteln 13 mit dem Wandelement 4 verbunden.

Die Ausführungsform von Fig. 14 ist jener von Fig. 13 sehr ähnlich mit der Ausnahme, dass der Längsrand 11 nach unten gerichtet ist und ebenso wie der Längsrand 41 eine Tropfnase 12 aufweist.

Mit der Ausführungsform von Fig 15 wird eine Grundform eines Profils 1o erzeugt, die jener von Fig. 5 ähnlich ist, wobei in Fig. 15 wiederum zwei Bleche 2, 37 verwendet werden, um diese Grundform zu schaffen. Das Blech 2 umgibt einen Innenraum 3a trapezförmig und das Blech 37 ergänzt die Kontur wiederum auf die im Wesentlichen rechteckige Profilform.

Die Längsränder 10, 41 der Bleche 2, 37 sind parallel nach oben gebogen und auf bereits beschrieben Weise mit Hilfe von Verbindungsmitteln 13 mit Blindnieten mit dem Längsrand 11 des Wandelements 4 verbunden, wobei wieder zwei Abstandhalter 16 zwischen den drei Längsrändern 10, 11, 41 angeordnet sind. Eine in Längsrichtung des Profils 1o verlaufende Sicke 43 ist zur Versteifung des Profils 1o vorgesehen und aus diesem Grund auch über Verbindungsmittel 13 mit dem Wandelement 23 des Blechs 2 verbunden.

Die Ausführungsform des Profils 1p von Fig. 16 ist jener von Fig. 15 sehr ähnlich mit der Ausnahme, dass der Längsrand 11 nach unten gerichtet ist und ebenso wie der Längsrand 10 eine Tropfnase 12 aufweist.

In den Zeichnungen sind Ausführungsformen dargestellt, bei denen ein einziges Blech 2 einen Innenraum 3, 3a um wenigstens 360° umgibt, wobei das Rohrprofil mit einem weiteren Blech 37 zu einer beispielsweise rechteckigen Form ergänzt werden kann. Es ist aber bei der Erfindung auch möglich, dass zwei oder mehr Bleche zusammen einen Innenraum um wenigstens 360° umgeben, jedes Blech für sich den Innenraum daher um einen Winkel kleiner 360° umgibt. So könnten beispielsweise zwei U-förmige Bleche zu einem einen Innenraum um 360° umgebenden Profil verbunden werden.

Es versteht sich, dass die einzelnen, in Verbindung mit den dargestellten Ausführungsformen beschriebenen konstruktiven Merkmale gemäß der Ansprüche miteinander kombiniert werden können, sodass auch Mischformen der einzelnen Ausführungsformen möglich sind, ebenso wie gänzlich andere Ausführungsformen bzw. Grundformen von Profilen, die nicht wie die in den Zeichnungen dargestellten und mit Bezug darauf beschriebenen Ausführungsformen im Wesentlichen rechteckig sind, sondern beispielsweise dreieckförmig, I-förmig, T-förmig, L-förmig oder sonst irgend wie vieleckig und ggf. mit gekrümmten Wandabschnitten, wie die Ausführungsform von Fig. 6 beispielhaft zeigt.

Außerdem können an beliebigen bzw. geeigneten Stellen der Wandabschnitte T-förmige, schwalbenschwanzförmige, schlüssellochförmige, pilzförmige oder ähnliche aber auch anders geformte Nuten zur einfachen Aufnahme von Befestigungselementen angebracht sein.

Außerdem ist die Verwendung von döppellagigen Blechen möglich, deren einzelne Lagen bei Bedarf in Bereichen hoher Biegespannungen bzw. Biegebelastungen voneinander beabstandet sein können.

## Patentansprüche

1. Profil (1), insbesondere Rohr, mit wenigstens einem, einen Innenraum (3) um wenigstens 360° umgebenden, gebogenen Blech (2), dessen Längsränder (10, 11) mit jeweils benachbarten Wandabschnitten (4, 6) des Blechs (2) verbunden sind, wobei die Längsränder (10, 11) von jeweils benachbarten Wandabschnitten (4, 6) oder Längsrändern (11, 10) mittels zwischen diesen angeordneten Abstandhaltern (16) so beabstandet, dass ein Spalt (17) besteht, und mit diesen mit Verbindungsmitteln (13) wie Schrauben, Nieten oder dergleichen formschlüssig verbunden sind, **dadurch gekennzeichnet, dass** in wenigstens einem Längsrand (10, 11) oder in wenigstens einem Wandabschnitt (4, 6) in den Verbindungsbereichen, in denen die Verbindungsmittel (13) angeordnet sind, tiefgezogene Näpfe (34, 36) angebracht sind.

2. Profil nach Anspruch 1, **dadurch gekennzeichnet, dass** die Längsränder (10, 11) einander überlappen und im Überlappungsbereich miteinander verbunden sind.

3. Profil nach Anspruch 1, **dadurch gekennzeichnet, dass** die Längsränder (10, 11) an gegenüber liegenden Seiten des Profils (1) mit dem jeweils benachbarten Wandabschnitt (4, 6) verbunden sind.

4. Profil nach Anspruch 1, **dadurch gekennzeichnet, dass** die Längsränder (10, 11) an benachbarten Seiten des Profils (1) mit dem jeweils benachbarten Wandabschnitt (7, 4) verbunden sind.

5. Profil nach Anspruch 1, **dadurch gekennzeichnet, dass** die Längsränder (10, 11) auf der selben Seite des Profils (1) mit dem jeweils benachbarten Wandabschnitt (4) oder Längsrand (11, 10) verbunden sind.

6. Profil nach einem der Ansprüche 1 bis 5, **dadurch gekennzeichnet, dass** es einen durch den Innenraum (3) verlaufenden Wandabschnitt (20, 22, 23, 24) aufweist.

7. Profil nach einem der Ansprüche 1 bis 6, **dadurch gekennzeichnet, dass** zusätzlich zu den an den Längsrändern (10, 11) angeordneten Verbindungsmitteln (13) Wandabschnitte (21, 23) mittels Verbindungsmitteln (13) formschlüssig verbunden sind.

8. Profil nach Anspruch 7, **dadurch gekennzeichnet, dass** die Wandabschnitte (21, 23) mittels Abstandhaltern (16) voneinander getrennt sind.

9. Profil nach einem der Ansprüche 1 bis 8, **dadurch gekennzeichnet, dass** auserhalb des Innenraums (1) liegende Längsränder (11) umgebördelt (12) sind.

10. Profil nach einem der Ansprüche 1 bis 9, **dadurch gekennzeichnet, dass** am Blech (2) ein weiters profiliertes Blech (37) mit Verbindungsmitteln (13) befestigt ist.

11. Profil nach Anspruch 10, **dadurch gekennzeichnet, dass** Verbindungsmittel (13) drei Längsränder (10, 11, 41) und/oder Wandabschnitte miteinander verbinden.

12. Profil nach Anspruch 11, **dadurch gekennzeichnet, dass** Verbindungsmittel (13) zwei Längsränder eines Blechs (2) und einen Längsrand (41) des zweiten Blechs (37) miteinander verbinden.

13. Profil nach Anspruch 12, **dadurch gekennzeichnet, dass** der zweite Längsrand (42) des zweiten Blechs (37) mit einem Wandabschnitt (4) des ersten Blechs (2) mit Verbindungsmitteln (13) verbunden ist.

14. Profil nach einem der Ansprüche 1 bis 13, **dadurch gekennzeichnet, dass** ein einziges Blech (2) oder zwei oder mehrere Bleche einen Innenraum (3, 3a) um wenigstens 360° umgibt bzw. umgeben.

15. Profil nach einem der Ansprüche 1 bis 14, **dadurch gekennzeichnet, dass** das Blech (2, 37) aus Stahl, vorzugsweise aus bandverzinktem und zusätzlich organisch bandbeschichtetem Stahl, besteht.

## Claims

1. Profile (1), more particularly a tube, having at least one bent metal sheet (2) which surrounds an interior space (3) by at least 360° and whose longitudinal edges (10, 11) are connected to respectively adjacent wall sections (4, 6) of the metal sheet (2), wherein the longitudinal edges (10, 11) of respectively adjacent wall sections (4, 6) or longitudinal edges (11, 10) are spaced apart from one another by means of spacers (16) arranged between them in such a way so that a gap (17) exists, and are positively connected thereto by connecting means (13) such as screws, rivets or the like, **characterized in that** deep-drawn cups (34, 36) are attached in at least one longitudinal edge (10, 11) or in at least one wall section (4, 6) in the connecting regions in which the connecting means (13) are arranged.

2. Profile according to claim 1, **characterized in that** the longitudinal edges (10, 11) overlap each other and are connected to each other in the overlap area.

3. Profile according to claim 1, **characterized in that** the longitudinal edges (10, 11) are connected on opposite sides of the profile (1) to the respective adjacent wall section (4, 6).

4. Profile according to claim 1, **characterized in that** the longitudinal edges (10, 11) on adjacent sides of the profile (1) are connected to the respectively adjacent wall section (7, 4).

5. Profile according to claim 1, **characterized in that** the longitudinal edges (10, 11) are connected on the same side of the profile (1) to the respectively adjacent wall section (4) or longitudinal edge (11, 10).

6. Profile according to one of claims 1 to 5, **characterized in that** it has a wall section (20, 22, 23, 24) extending through the interior space (3).

7. Profile according to one of claims 1 to 6, **characterized in that**, in addition to the connecting means (13) arranged on the longitudinal edges (10, 11), wall sections (21, 23) are positively connected by means of connecting means (13).

8. Profile according to claim 7, **characterized in that** the wall sections (21, 23) are separated from each other by means of spacers (16).

9. Profile according to one of claims 1 to 8, **characterized in that** longitudinal edges (11) lying outside the interior space (1) are flanged (12).

10. Profile according to one of claims 1 to 9, **characterized in that** a further profiled metal sheet (37) is fastened to the metal sheet (2) by connecting means (13).

11. Profile according to claim 10, **characterized in that** connecting means (13) connect three longitudinal edges (10, 11,41) and/or wall sections to each other.

12. Profile according to claim 11, **characterized in that** connecting means (13) connect two longitudinal edges of one metal sheet (2) and one longitudinal edge (41) of the second metal sheet (37) to each other.

13. Profile according to claim 12, **characterized in that** the second longitudinal edge (42) of the second metal sheet (37) is connected to a wall section (4) of the first metal sheet (2) by connecting means (13).

14. Profile according to one of claims 1 to 13, **characterized in that** a single metal sheet (2) or two or more metal sheets surround an interior space (3, 3a) by at least 360°.

15. Profile according to one of claims 1 to 14, **characterized in that** the metal sheet (2, 37) is made of steel, preferably of strip-galvanized and additionally organically strip-coated steel.

## Revendications

1. Profilé (1), en particulier tube, avec au moins une tôle cintrée (2) entourant un espace intérieur (3) sur au moins 360°, dont les bords longitudinaux (10, 11) sont reliés à des parties de paroi (4, 6) respectivement adjacentes de la tôle (2), les bords longitudinaux (10, 11) étant espacés des parties de paroi (4, 6) ou des bords longitudinaux (11, 10) respectivement adjacents au moyen d'écarteurs (16) disposés entre ceux-ci, de telle sorte qu'il existe une fente (17), et y étant reliés par complémentarité de forme à l'aide de moyens de liaison (13) tels que des vis, des rivets ou analogues, **caractérisé en ce que** des coupelles embouties (34, 36) sont réalisées dans au moins un bord longitudinal (10, 11) ou dans au moins une partie de paroi (4, 6) dans les zones de liaison dans lesquelles les moyens de liaison (13) sont disposés.

2. Profilé selon la revendication 1, **caractérisé en ce que** les bords longitudinaux (10, 11) se chevauchent et sont reliés entre eux dans la zone de chevauchement.

3. Profilé selon la revendication 1, **caractérisé en ce que** les bords longitudinaux (10, 11) sont reliés à la partie de paroi respectivement adjacente (4, 6) sur des côtés opposés du profilé (1).

4. Profilé selon la revendication 1, **caractérisé en ce que** les bords longitudinaux (10, 11) sont reliés à la partie de paroi respectivement adjacente (7, 4) sur des côtés adjacents du profilé (1).

5. Profilé selon la revendication 1, **caractérisé en ce que** les bords longitudinaux (10, 11) sont reliés à la partie de paroi (4) ou au bord longitudinal (11, 10) respectivement adjacent(e) sur le même côté du profilé (1).

6. Profilé selon l'une des revendications 1 à 5, **caractérisé en ce qu'**il présente une partie de paroi (20, 22, 23, 24) s'étendant à travers l'espace intérieur (3).

7. Profilé selon l'une des revendications 1 à 6, **caractérisé en ce qu'**en plus des moyens de liaison (13) disposés sur les bords longitudinaux (10, 11), des parties de paroi (21, 23) sont reliées par complémentarité de forme à l'aide de moyens de liaison (13).

8. Profilé selon la revendication 7, **caractérisé en ce que** les parties de paroi (21, 23) sont séparées les unes des autres au moyen d'écarteurs (16).

9. Profilé selon l'une des revendications 1 à 8, **caractérisé en ce que** les bords longitudinaux (11) situés à l'extérieur de l'espace intérieur (1) sont rabattues (12).

10. Profilé selon l'une des revendications 1 à 9, **caractérisé en ce qu'**une autre tôle profilée (37) est fixée à la tôle (2) par des moyens de liaison (13).

11. Profilé selon la revendication 10, **caractérisé en ce que** des moyens de liaison (13) relient entre eux trois bords longitudinaux (10, 11, 41) et/ou parties de paroi.

12. Profilé selon la revendication 11, **caractérisé en ce que** des moyens de liaison (13) relient entre eux deux bords longitudinaux d'une tôle (2) et un bord longitudinal (41) de la deuxième tôle (37).

13. Profilé selon la revendication 12, **caractérisé en ce que** le deuxième bord longitudinal (42) de la deuxième tôle (37) est relié à une partie de paroi (4) de la première tôle (2) par des moyens de liaison (13).

14. Profilé selon l'une des revendications 1 à 13, **caractérisé en ce qu'**une seule tôle (2) ou deux ou plusieurs tôles entoure ou entourent un espace intérieur (3, 3a) sur au moins 360°.

15. Profilé selon l'une des revendications 1 à 14, **caractérisé en ce que** la tôle (2, 37) est en acier, de préférence en acier galvanisé en continu et en outre revêtu en continu de matières organiques.
